(19) Europäisches Patentamt
European Patent Office
Office européen des brevets

(11) **EP 0 992 780 B1**

(12) **FASCICULE DE BREVET EUROPEEN**

(45) Date de publication et mention
de la délivrance du brevet:
**21.09.2011 Bulletin 2011/38**

(51) Int Cl.:
*G01L 19/02* (2006.01)     *G01M 15/00* (2006.01)
*F02D 41/04* (2006.01)

(21) Numéro de dépôt: **99402402.4**

(22) Date de dépôt: **01.10.1999**

(54) **Procédé de détermination de la pression atmosphérique**

Verfahren zu Ermittlung des atmosphärischen Drucks

Method of determining atmospheric pressure

(84) Etats contractants désignés:
**DE GB IT SE**

(30) Priorité: **09.10.1998 FR 9812679**

(43) Date de publication de la demande:
**12.04.2000 Bulletin 2000/15**

(73) Titulaire: **Renault Trucks
69800 Saint Priest (FR)**

(72) Inventeur: **Simon, Dominique
69720 St. Bonnet de Mure (FR)**

(74) Mandataire: **Palix, Stéphane et al
Cabinet Laurent & Charras
"Le Contemporain"
50, Chemin de la Bruyère
69574 Dardilly Cedex (FR)**

(56) Documents cités:
**US-A- 4 590 563     US-A- 4 926 335
US-A- 5 020 363**

## Description

La présente invention concerne le domaine de la détermination de la pression atmosphérique, notamment dans un moteur thermique pourvu d'un calculateur électronique.

L'information de pression atmosphérique est utilisée par le calculateur électronique de contrôle du moteur pour de nombreuses applications. De façon connue, cette information est fournie par un capteur spécifique, par exemple implanté dans le calculateur de contrôle du moteur. Or, la demanderesse s'est aperçue que l'utilisation d'un capteur de pression atmosphérique dédié présente quelques inconvénients, liés aux risques de pannes du capteur nécessitant le remplacement du calculateur, à son coût, à la surface utilisée sur le circuit du calculateur et à la tenue aux contraintes d'implantation sur le bloc moteur, notamment en termes de température, de vibrations, etc.

La présente invention a pour objet de supprimer le capteur dédié à la mesure de la pression atmosphérique dans le calculateur tout en fournissant audit calculateur une information de pression atmosphérique.

La présente invention a pour objet de calculer la pression atmosphérique à partir d'une information de pression en provenance d'un autre capteur de pression déjà installé sur le moteur thermique ,comme il a été proposé dans US 4 597 265, US 4 926 335 et US 5 020 363.

Le procédé de détermination de la pression atmosphérique $P_{atmo}$, selon l'invention, s'effectue à partir de la pression d'air $P_2$ mesurée dans un organe de suralimentation d'un moteur diesel turbo compressé possédant un frein moteur de type frein Jacob ou frein sur échappement, du débit de carburant injecté D, du régime du moteur N, et du frein moteur F, avec :

- si le moteur est à l'arrêt, $P_{atmo} = P_2$;
- si le moteur est au ralenti, au bout d'une durée $t_{ralenti}$,

$$P_{atmo} = P_2\text{-}\Delta;$$

- si le moteur est en fonctionnement à injection nulle sans frein moteur, au bout d'une durée $T_{FODO}$, $P_{atmo} = P_2\text{-}\Delta$; et
- si le moteur est en fonctionnement à injection nulle avec frein moteur, au bout d'une durée $T_{FOD1}$, $P_{atmo} = P_2\text{-}\Delta$;
 $\Delta$ étant une variable dépendant du régime du moteur et du frein moteur ainsi que de son type (JACOB et/ou frein sur échappement).

Si le moteur est en fonctionnement à injection nulle après arrêt du frein moteur, au bout d'une durée $t_{FOD2}$, $P_{atmo} = P_2\text{-}\Delta$.

Dans un mode de réalisation de l'invention, à débit de carburant injecté nul, $\Delta$ varie en fonction du régime du moteur et du frein moteur, et au ralenti $\Delta$ reste constant.

De préférence, les valeurs de $\Delta$ sont préenregistrées dans une mémoire d'un calculateur du moteur.

Dans un mode de réalisation de l'invention, les durées $t_{ralenti}$, $t_{FODO}$, $t_{FOD1}$ et $t_{FOD2}$ sont constantes.

Dans un mode de réalisation de l'invention, les durées $t_{ralenti}$, $t_{FODO}$, $t_{FOD1}$ et $t_{FOD2}$ sont calculées en fonction de la pression d'air $P_2$.

Dans un mode de réalisation de l'invention, les durées $t_{ralenti}$, $t_{FODO}$, $t_{FOD1}$ et $t_{FOD2}$ sont calculées en effectuant la somme d'une durée de temps de réponse due à l'hystérésis de l'organe de suralimentation et calculée à partir de la pression d'air $P_2$, et d'une durée de transition calculée à partir de la pression d'air $P_2$ mesurée au début de la transition.

Dans un mode de réalisation de l'invention, la durée de temps de réponse et la durée de transition sont calculées à partir du régime moteur.

Dans un mode de réalisation de l'invention, si la pression d'air $P_2$ est inférieure avec une tolérance prédéterminée et enregistrée dans une mémoire du calculateur à la pression atmosphérique $P_{atmo}$ précédemment calculée, on considère que la pression atmosphérique $P_{atmo}$ est égale à la pression d'air $P_2$.

Ainsi, on peut réduire de façon substantielle le coût du calculateur qui est dépourvu de capteur de pression atmosphérique. On réduit également le risque de panne sur le calculateur et la surface de circuit utilisée.

Un moteur diesel suralimenté et piloté par calculateur électronique possède un capteur de pression d'air $P_2$ dite pression TURBO ou pression d'air d'admission.

Lors de certaines phases de fonctionnement du moteur sur véhicule, la pression atmosphérique peut être calculée à partir de la pression $P_2$.

Ces phases sont au nombre de quatre.

- Contact mis et moteur à l'arrêt
- Moteur au ralenti
- Véhicule en mode retenue moteur (débit injecté nul) et sans utilisation des freins moteur
- Véhicule en mode retenue moteur (débit injecté nul) et avec utilisation des freins moteur du type JACOB et/ou frein sur échappement "tout ou rien" ou "modulé".

Il existe une cinquième phase dite "de sécurité" consistant à réactualiser la valeur de la pression atmosphérique lorsque la mesure de la pression $P_2$ est inférieure (avec une tolérance) à la dernière valeur de pression atmosphérique calculée.

Les cas de figure que l'on peut rencontrer lors du fonctionnement du moteur sont les suivants :

1°/ si la pression mesurée $P_2$ est inférieure avec une tolérance à la pression atmosphérique précédemment calculée; on décide alors d'affecter à la variable

$P_{atmo}$ la valeur de la pression mesurée $P_2$. Toutefois, ce cas est particulier et correspond plutôt à une sécurité de fonctionnement. En variante et afin de tenir compte d'éventuelles dépressions dans le circuit d'alimentation en air du moteur, on pourra ajouter une légère marge de pression à la valeur de la pression $P_2$.

2°/ au démarrage, avant que le moteur ne tourne et dès que le contact est établi, on a strictement : $P_{atmo}$ = $P_2$. Cette valeur est la plus précise que l'on puisse avoir. En effet, il n'y a pas de compression de l'air d'admission. La pression de l'air mesurée par le capteur de la pression $P_2$ est donc strictement égale à celle de la pression atmosphérique. Pour bénéficier de la précision de cette mesure, cette valeur sera conservée tant que le régime moteur est au ralenti après le démarrage.

3°/ au ralenti, le débit de carburant injecté est faible, par exemple entre 5 et 15 mg/coup, cette valeur étant connue par le calculateur de contrôle du moteur. L'air d'amission est peu comprimé. Au bout d'une durée $t_{ralenti}$ liée à la stabilisation du fonctionnement du moteur, on décide que $P_{atmo}$ = $P_2$-$\Delta$. A ce régime, la variable $\Delta$ est une constante préenregistrée dans la mémoire du calculateur.

4°/ à injection de carburant nulle et frein moteur nul, après une durée $t_{FODO}$, on a $P_{atmo}$ = $P_2$-$\Delta$, la variable $\Delta$ étant fonction du régime du moteur, valeur qui est connue par le calculateur de contrôle moteur. La durée $t_{FODO}$ peut être constante et mémorisée par le calculateur ou être calculée par ce dernier en fonction de la pression d'air mesurée $P_2$ au moment de la demande d'injection de carburant nulle.
On effectuera donc une acquisition de la valeur de la pression mesurée $P_2$ après décompte de la durée $t_{FODO}$.

5°/ à injection de carburant nulle et frein moteur activé, au bout d'une durée $t_{FOD1}$, on a $P_{atmo}$ = $P_2$-$\Delta$. Il est à remarquer que généralement le frein moteur ne peut être activé que lorsque le débit est nul. Il n'est donc pas nécessaire de tester la valeur du débit quand le frein moteur est activé.

6°/ à injection de carburant nulle et frein moteur nul, après une phase de frein moteur, après une durée $t_{FOD2}$, ou à $P_{atmo}$ = $P_2$-$\Delta$.

La détermination de la variable $\Delta$ d'écart de pression existant entre la pression mesurée $P_2$ et la pression atmosphérique $P_{atmo}$, se calcule de la façon suivante :

- si le moteur est arrêté, $\Delta$ est nul.
- lorsque le débit injecté est nul, $\Delta$ varie en fonction du régime moteur. Plus le régime moteur est important, plus la valeur de $\Delta$ est grande et inversement. Les valeurs de $\Delta$ seront aussi différentes si le frein moteur est activé ou pas.
- lorsque le moteur est au ralenti, son régime ne varie quasiment pas. $\Delta$ reste donc quasiment constant.

Les différentes durées de temporisation après lesquelles l'acquisition de la pression mesurée $P_2$ peut être effectuée, sont modélisées de la façon suivante. Après un changement de l'état du moteur (régime, frein moteur, débit d'injection), la valeur de la pression mesurée $P_2$ n'est pas modifiée instantanément. La durée de temporisation peut se décomposer en deux :

- un retard de réponse dû en particulier à l'hystérésis du turbo du moteur thermique et qui peut être calculée en fonction de la valeur de pression précédemment mesurée ou en fonction du régime moteur;
- une durée de transition liée à l'inertie du turbo du moteur thermique calculée en fonction de la valeur de la pression mesurée $P_2$ en début de transition et, éventuellement, en fonction du régime moteur.

Avantageusement, et pour simplifier le fonctionnement du calculateur, sachant que le retard de réponse est relativement faible et difficile à évaluer, on travaillera sans différencier le retard et la durée de transition. Pour simplifier encore le fonctionnement du calculateur, on pourra utiliser des durées de temporisation constantes et préenregistrées.
Lorsque le moteur est en fonctionnement à injection nulle, après arrêt du frein moteur, on utilisera une durée de temporisation particulière $t_{FOD2}$ différente des précédentes.
A titre d'exemple, lors de l'établissement du contact du véhicule, on vérifie :

phase "Contact établi"

- si N = O, alors $P_{atmo}$ = $P_2$ ; retour à la phase "Contact établi" ;
- si N > O et < 700, retour à la phase "Contact établi" ;
- N > 700 ; alors débit d'injection non nul, D ≠ O; vers phase "Débit non nul"

phase "Décompte ralenti"

- si N < 700 et $t_{ralenti}$ = O alors vers phase "Acquisition ralenti" ;
- si N < 700 et $t_{ralenti}$ ≠ O, alors on décrémente $t_{ralenti}$ ; et on retourne à la phase "Décompte ralenti" ;
- si N > 700, alors vers phase "Débit non nul" ; phase "Acquisition ralenti"
- si N < 700, alors calcul de $\Delta$ en fonction de N, $P_{atmo}$ = $P_2$-$\Delta$ ; retour à la phase "Acquisition ralenti" ;

- si N supérieur ou égal à 700, alors vers phase "Débit non nul" ;
  phase "Débit non nul" : D ≠ O
- si D ≠ O et N supérieur ou égal à 700, retour à la phase "Débit non nul" ;
- si D # O et N inférieur à 700, alors retour à la phase "Décompte ralenti" ;
- si D = O, alors $t_{FODO}$ = $t_{FODO}$ initial et phase "Décompte sans frein allé" ;
  phase "Décompte sans frein allé" : D = O, F = O et $t_{FODO}$ ≠ O ;
- si D = O, F = O, et $t_{FODO}$≠O, on décrémente $t_{FODO}$ et on retourne à la phase "Décompte sans frein allé" ;
- si D = O, F = O et $t_{FODO}$ = O, on va à la phase "Acquisition sans frein" ;
- si D ≠ O, alors on retourne à la phase "Débit non nul" ;
- si D = O et F ≠ O, on va à la phase "Décompte avec frein allé" ;
  phase "Acquisition sans frein" : D = O, F = O, et $T_{FODO}$ = O;
- si D = O et F = O, alors calcul de Δ en fonction de N, $P_{atmo}$ = $P_2$-Δ, on retourne à la phase "Acquisition sans frein" ;
- si F ≠ O, alors on décrémente $t_{FOD1}$, et on retourne à la phase "Décompte avec frein allé" ;
- si D ≠ O, alors on retourne à la phase "Débit non nul" ;
  phase "Décompte avec frein allé" : D = O, F ≠ O, $T_{FOD1}$ ≠ O
- si F ≠ O et $t_{FOD1}$ ≠ O, alors on décrémente $T_{FOD1}$ et on retourne à la phase "Décompte avec frein allé" ;
- si F ≠ O et $t_{FOD1}$ = O, alors on va à la phase "Acquisition avec frein" ;
- si F = O, on va à la phase "Décompte avec frein retour" ;
  phase "Acquisition avec frein" : F ≠ O
- si F ≠ O, alors calcule de Δ en fonction de N , $P_{atmo}$ = $P_2$-Δ, on retourne à la phase "Acquisition avec frein ;
- si F = O, on retourne à la phase "Décompte avec frein retour" ;
  phase "Décompte avec frein retour" : D = O, F = O et $t_{FOD2}$ ≠ O
- si F = O et $t_{FOD2}$ ≠ O, alors on décrémente $t_{FOD2}$ et on retourne à la phase "Décompte avec frein retour" ;
- si F = O et $t_{FOD2}$ = O, alors on retourne à la phase "Acquisition sans frein" ;
- si F ≠ O, on retourne à la phase "Décompte avec frein allé".

Grâce à l'invention, on peut supprimer le capteur de pression atmosphérique dans un moteur thermique, en particulier dans un moteur diesel turbocompressé, la valeur de la pression atmosphérique étant calculée à partir d'une valeur de pression de gaz interne au moteur mesurée par un capteur dédié nécessaire pour d'autres raisons.

L'invention permet donc une économie substantielle, une simplification du calculateur et un accroissement de la fiabilité du moteur.

## Revendications

1. Procédé de détermination de la pression atmosphérique $P_{atmo}$ à partir :

   de la pression d'air $P_2$ mesurée dans un organe de suralimentation d'un moteur diesel turbo compressé possédant un frein moteur de type frein Jacob ou frein sur échappement ;
   ■ du débit de carburant injecté D ;
   ■ du régime moteur N ;
   ■ et du frein moteur F,
   avec
   ■ si le moteur est à l'arrêt, $P_{atmo}$ = $P_2$;
   ■ si le moteur-est au ralenti, au bout d'une durée traient $P_{atmo}$ = $P_2$- Δ;
   ■ si le moteur est en fonctionnement à injection nulle sans frein moteur, au bout d'une durée $t_{FODO}$, $P_{atmo}$ = $P_2$- Δ ;
   ■ et si le moteur est en fonctionnement à injection nulle avec frein moteur, au bout d'une durée $t_{FOD1}$, $P_{atmo}$ = $P_2$- Δ;
   Δ étant une variable dépendant du régime du moteur et du type de frein moteur.

2. Procédé selon la revendication 1, dans lequel, si le moteur est en fonctionnement à injection nulle après arrêt du frein moteur, au bout d'une durée $t_{FOD2}$, $P_{atmo}$ = $P_2$-Δ.

3. Procédé selon la revendication 1 ou 2, dans lequel, à débit de carburant injecté nul, Δ varie en fonction du régime du moteur et du frein moteur, et au ralenti Δ reste constant.

4. Procédé selon l'une quelconque des revendications précédentes, dans lequel les valeurs Δ sont préenregistrées dans une mémoire d'un calculateur du moteur.

5. Procédé selon l'une quelconque des revendications précédentes, dans lequel les durées $t_{ralenti}$, $t_{FODO}$, $t_{FOD1}$ et $t_{FOD2}$ sont constantes.

6. Procédé selon l'une quelconque des revendications 1 à 4, dans lequel les durées $t_{ralenti}$, $t_{FODO}$, $t_{FOD1}$ et $t_{FOD2}$ sont calculées en fonction de la pression d'air $P_2$.

7. Procédé selon l'une quelconque des revendications 1 à 4, dans lequel les durées $t_{ralenti}$, $t_{FODO}$, $t_{FOD1}$ et $t_{FOD2}$ sont calculés en effectuant la somme d'une durée de temps de réponse du à l'hystérésis de l'organe de suralimentation et calculée à partir de la

pression d'air $P_2$, et d'une durée de transition calculée à partir de la pression d'air $P_2$ mesurée au début de la transition.

8. Procédé selon la revendication 7, dans lequel la durée de temps de réponse et la durée de transition sont calculées à partir du régime moteur.

9. Procédé selon l'une quelconque des revendications précédentes, dans lequel si la pression d'air $P_2$ est inférieure avec une tolérance prédéfinie et enregistrée dans une mémoire du calculateur à la pression atmosphérique $P_{atmo}$ précédemment calculée, on considère que la pression atmosphérique $P_{atmo}$ est égale à la pression d'air $P_2$.

10. Utilisation du procédé selon l'une quelconque des revendications précédentes dans un moteur thermique.

**Claims**

1. Method of determining atmospheric pressure $P_{atmo}$ from:

   ■ the air pressure $P_2$ measured in a supercharger of a compressed turbo diesel engine that has an engine brake of the Jacob brake or exhaust brake type;
   ■ the injected fuel flow D;
   ■ the engine speed N;
   ■ and the engine brake F,
   with
   ■ if the engine is stopped, $P_{atmo} = P_2$;
   ■ if the engine is idling, at the end of a time $t_{idling}$, $P_{atmo} = P_2 - \Delta$;
   ■ if the engine is in zero injection operation without engine brake, at the end of a time $T_{FOD0}$, $P_{atmo} = P_2 - \Delta$;
   ■ if the engine is in zero injection operation with engine brake, at the end of a time $t_{FOD1}$, $P_{atmo} = P_2 - \Delta$;
   $\Delta$ being a variable dependent on the engine speed and on the type of engine brake.

2. Method as claimed in claim 1, wherein, if the engine is in zero injection operation after the engine brake is stopped, at the end of a time $t_{FOD2}$, $P_{atmo} = P_2 - \Delta$.

3. Method as claimed in claim 1 or 2, wherein, at zero injected fuel flow, $\Delta$ varies as a function of the engine speed and the engine brake, and when idling $\Delta$ remains constant.

4. Method as claimed in any one of the previous claims, wherein the values of $\Delta$ are pre-stored in a memory of a computer of the engine.

5. Method as claimed in any one of the previous claims, wherein the times $t_{idling}$, $t_{FOD0}$, $t_{FOD1}$ and $t_{FOD2}$ are constant.

6. Method as claimed in any one of claims 1 to 4, wherein the times $t_{idling}$, $T_{FOD0}$, $t_{FOD1}$ and $t_{FOD2}$ are calculated as a function of the air pressure $P_2$.

7. Method as claimed in any one of claims 1 to 4, wherein the times $t_{idling}$, $T_{FOD0}$, $t_{FOD1}$ and $t_{FOD2}$ are calculated by adding together a response time due to the hysteresis of the supercharger and calculated from the air pressure $P_2$, and a transition time calculated from the air pressure $P_2$ measured at the start of the transition.

8. Method as claimed in claim 7, wherein the duration of the response time and the transition time are calculated from the engine speed.

9. Method as claimed in any one of the previous claims, wherein if the air pressure $P_2$ is lower with a pre-specified tolerance stored in a computer memory than the atmospheric pressure $P_{atmo}$ previously calculated, it is considered that the atmospheric pressure $P_{atmo}$ is equal to the air pressure $P_2$.

10. Use of the method as claimed in any one of the previous claims in a heat engine.

**Patentansprüche**

1. Verfahren zum Bestimmen des Atmosphärendrucks $P_{atmo}$ aus:

   ■ dem Luftdruck $P_2$ gemessen in einem Aufladungsteil eines Turbodieselkompressormotors, der eine Motorbremse der Bauart Jacob-Bremse oder Auspuffbremse besitzt;
   ■ dem Durchsatz des eingespritzten Kraftstoffs D;
   ■ der Motordrehzahl N;
   ■ und der Motorbremse F,
   wobei
   ■ wenn der Motor im Stillstand ist, $P_{atmo} = P_2$ ist;
   ■ wenn der Motor im Leerlauf ist, am Ende einer Dauer $t_{Leerlauf}$, $P_{atmo} = P_2 - \Delta$ ist;
   ■ wenn der Motor im Nulleinspritzbetrieb ohne Motorbremse ist, am Ende einer Dauer $t_{FOD0}$, $P_{atmo} = P_2 - \Delta$ ist;
   ■ und wenn der Motor im Nulleinspritzbetrieb mit Motorbremse ist, am Ende einer Dauer $t_{FOD1}$, $P_{atmo} = P2 - \Delta$ ist;
   wobei $\Delta$ eine von der Motordrehzahl und der Motorbremsenart abhängige Variable ist.

2. Verfahren nach Anspruch 1, bei dem, wenn der Motor im Nulleinspritzbetrieb nach Stillstand der Motorbremse ist, am Ende einer Dauer $t_{FOD2}$, $P_{atmo} = P_2 - \Delta$ ist.

3. Verfahren nach Anspruch 1 oder 2, bei dem bei einem Durchsatz von eingespritztem Kraftstoff von Null, $\Delta$ in Abhängigkeit von der Motordrehzahl und der Motorbremse variiert und $\Delta$ im Leerlauf konstant bleibt.

4. Verfahren nach einem der vorhergehenden Ansprüche, bei dem die Werte von $\Delta$ in einem Speicher eines Motorrechners voraufgezeichnet sind.

5. Verfahren nach einem der vorhergehenden Ansprüche, bei dem die Dauern $t_{Leehauf}$, $t_{FOD0}$, $t_{FOD1}$ und $t_{FOD2}$ konstant sind.

6. Verfahren nach einem der Ansprüche 1 bis 4, bei dem die Dauern $t_{Leerlauf}$, $t_{FOD0}$, $t_{FOD1}$ und $t_{FOD2}$ in Abhängigkeit vom Luftdruck $P_2$ berechnet werden.

7. Verfahren nach einem der Ansprüche 1 bis 4, bei dem die Dauern $t_{Leerlauf}$, $t_{FOD0}$, $t_{FOD1}$ und $t_{FOD2}$ berechnet werden, indem die Summe einer Ansprechzeitdauer aufgrund der Hysterese des Aufladungsteils, und die aus dem Luftdruck $P_2$ berechnet wird, und einer Übergangsdauer hergestellt wird, die aus dem zu Beginn des Übergangs gemessenen Luftdruck $P_2$ berechnet wird.

8. Verfahren nach Anspruch 7, bei dem die Ansprechzeitdauer und die Übergangsdauer aus der Motordrehzahl berechnet werden.

9. Verfahren nach einem der vorhergehenden Ansprüche, bei dem, wenn der Luftdruck $P_2$ mit einer vorgegebenen und in einem Speicher des Rechners aufgezeichneten Toleranz unter dem zuvor berechneten Atmosphärendruck $P_{atmo}$ liegt, davon ausgegangen wird, dass der Atmosphärendruck $P_{atmo}$ gleich dem Luftdruck $P_2$ ist.

10. Verwendung des Verfahrens nach einem der vorhergehenden Ansprüche in einem Wärmemotor.

**EP 0 992 780 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4597265 A
- US 4926335 A

- US 5020363 A